# EUROPEAN PATENT SPECIFICATION

(11) **EP 3 378 642 B1**
(45) Date of publication and mention of the grant of the patent: **21.07.2021**
(21) Application number: 17382147.1
(22) Date of filing: 23.03.2017
(51) Int. Cl.: B32B 15/08, B32B 15/20, B32B 27/34

(54) **MULTILAYER FILMS AND PACKAGES COMPRISING THE SAME**
MEHRSCHICHTIGE FILME UND VERPACKUNGEN DAMIT
FILMS MULTICOUCHES ET EMBALLAGES LES COMPRENANT

(43) Date of publication of application: 26.09.2018
(73) Proprietor: Dow Global Technologies, LLC, Midland, MI 48674 (US)
(72) Inventor: HILL, Martin, 43006 Tarragona (ES)
(74) Representative: Elzaburu S.L.P.

(56) References cited:
- EP-A1- 2 204 409
- WO-A1-2017/000339
- US-A1- 2013 095 335

## Description

### Field

The present invention relates to multilayer films and to packages comprising such films.

### Introduction

Heat sealable and easy-opening films are employed on a large scale for temporarily closing containers that include, for example, food products. For example, the peelable film can be sealed to a rigid container such as a tray. During use, a consumer tears away the peelable film.

Heat sealable films must be capable of being sealed upon the application of heat. During typical sealing processes, the backing or web layer of the film comes into direct contact with a heated surface such as a sealing jaw. Heat is thus transferred through the backing layer of the film to melt and fuse the inner sealant layer to form a seal.

The force required to pull a seal apart is called "seal strength" or "heat seal strength" which can be measured in accordance with ASTM F2029-00(B). The desired seal strength varies according to specific end user applications. For flexible packaging applications, such as cereal liners, snack food packages, cracker tubes and cake mix liners, the seal strength desired is generally in the range of about 2-10 N/15 mm. For example, for easy-open cereal box liners, a seal strength in the range of about 3-6 N/15 mm is commonly specified, although specific targets vary according to individual manufactures requirements. In addition to flexible packaging application, a sealable and peelable film can also be used in rigid package applications, such as lids for convenience items (e.g., snack food such as puddings) and medical devices. Typical rigid packages also have a seal strength of about 3-6 N/15 mm.

Multilayer films or structures to be sealed normally include a sealant layer that when heated seals the film or structure to another film surface (of the same film or a different film), to a rigid package, or to another surface. There a number of peel systems by which a package can be opened.

In an adhesive peel system, a multilayer film or structure with a sealant layer is sealed to a substrate (e.g., another multilayer film or structure, a rigid package). If the substrate does not include a sealant layer, the sealant layer separates from the substrate (e.g., the multilayer film or structure with the sealant layer is cleanly removed from the substrate). If the substrate also includes a sealant layer, there is a clear separation between the sealant layers.

In a cohesive peel system, the seal opens cohesively within the sealant layer. In such a system, residual sealant layer may be visible on the substrate as the failure occurs within the sealant layer.

In a burst peel or delamination system, the seal remains tight but the sealant layer delaminates adhesively from the substrate.

Additional information about such systems can be found in Technical Bulletin No. 106/2011, "Guideline for the design of 'easy opening' peelable packaging systems", published by the Industrial Association for Food Technology and Packaging (June 2011).

Burst peel opening mechanisms can be particularly desirable for some applications.

There remains a need for new approaches to multilayer films and/or structures that provide consistent and more easily tailorable opening forces when incorporated into a package.

### Summary

The present invention provides multilayer films that can provide consistent and tailorable opening forces when incorporated into a package. For example, in some embodiments, multilayer films, when incorporated into a package, can open by delamination within the multilayer film (i.e., burst peel). In some embodiments, for example, the multilayer film provides a peelable seal that opens due to delamination between a sealant layer and an adjacent layer. Multilayer films, in some embodiments, can provide an "easy open" seal (e.g., the film can have a maximum seal strength of 2.5 to 6.5 N/15 mm at temperatures between 100° C and 140° C when measured according to ASTM F2029-00(B)).

In one aspect, the present invention provides a multilayer film that comprises Layer A which is a sealant layer having a top facial surface and a bottom facial surface and comprises at least 30 weight percent low density polyethylene based on the weight of Layer A; and Layer B having a top facial surface and a bottom facial surface and comprising at least 70 weight percent of at least one of homopolymer polypropylene, random copolymer polypropylene, an impact copolymer of polypropylene, or a combination thereof based on the weight of Layer B, wherein the top facial surface of Layer B is in adhering contact with a bottom facial surface of Layer A, wherein the film is configured to provide a peelable seal that opens due to delamination between Layer A and Layer B.

In another aspect, the present invention relates to a package, such as a pouch, comprising any of the multilayer films disclosed herein.

In another aspect, the present invention relates to a package comprising any of the multilayer films disclosed herein and a tray, wherein the top facial surface of Layer A is sealed to at least a portion of the tray.

In another aspect, the present invention relates to a multilayer structure comprising any of the multilayer films disclosed herein laminated to a substrate.

In another aspect, the present invention relates to a package comprising any of the multilayer structures disclosed herein.

In another aspect, the present invention relates to a package comprising any of the multilayer structures disclosed herein and a tray, wherein the top facial surface of Layer A is sealed to at least a portion of the tray.

These and other embodiments are described in more detail in the Detailed Description.

### Brief Description of the Figure

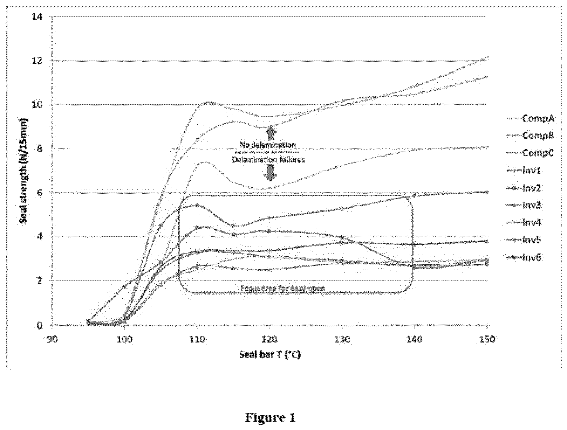

Figure 1 is a chart illustrating the heat seal strengths of multilayer films according to some embodiments of the present invention and comparative films at various temperatures.

### Detailed Description

Unless stated to the contrary, implicit from the context, or customary in the art, all parts and percents are based on weight, all temperatures are in ° C, and all test methods are current as of the filing date of this disclosure.

The term "composition," as used herein, refers to a mixture of materials which comprises the composition, as well as reaction products and decomposition products formed from the materials of the composition.

"Polymer" means a polymeric compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure), and the term interpolymer as defined hereinafter. Trace amounts of impurities (for example, catalyst residues) may be incorporated into and/or within the polymer. A polymer may be a single polymer, a polymer blend or polymer mixture.

The term "interpolymer," as used herein, refers to polymers prepared by the polymerization of at least two different types of monomers. The generic term interpolymer thus includes copolymers (employed to refer to polymers prepared from two different types of monomers), and polymers prepared from more than two different types of monomers.

The terms "olefin-based polymer" or "polyolefin", as used herein, refer to a polymer that comprises, in polymerized form, a majority amount of olefin monomer, for example ethylene or propylene (based on the weight of the polymer), and optionally may comprise one or more comonomers.

"Polypropylene" means a polymer having greater than 50 wt% units derived from propylene monomer. The term "polypropylene" includes homopolymers of propylene such as isotactic polypropylene, random copolymers of propylene and one or more C_{2, 4-8} α-olefins in which propylene comprises at least 50 mole percent, and impact copolymers of polypropylene.

The term, "ethylene/α-olefin interpolymer," as used herein, refers to an interpolymer that comprises, in polymerized form, a majority amount of ethylene monomer (based on the weight of the interpolymer), and an α-olefin.

The term, "ethylene/α-olefin copolymer," as used herein, refers to a copolymer that comprises, in polymerized form, a majority amount of ethylene monomer (based on the weight of the copolymer), and an α-olefin, as the only two monomer types.

The term "in adhering contact" and like terms mean that one facial surface of one layer and one facial surface of another layer are in touching and binding contact to one another.

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of' excludes from the scope of any succeeding recitation any other component, step or procedure, excepting those that are not essential to operability. The term "consisting of' excludes any component, step or procedure not specifically delineated or listed.

"Polyethylene" or "ethylene-based polymer" shall mean polymers comprising greater than 50% by weight of units which have been derived from ethylene monomer. This includes polyethylene homopolymers or copolymers (meaning units derived from two or more comonomers). Common forms of polyethylene known in the art include Low Density Polyethylene (LDPE); Linear Low Density Polyethylene (LLDPE); Ultra Low Density Polyethylene (ULDPE); Very Low Density Polyethylene (VLDPE); single-site catalyzed Linear Low Density Polyethylene, including both linear and substantially linear low density resins (m-LLDPE); Medium Density Polyethylene (MDPE); and High Density Polyethylene (HDPE). These polyethylene materials are generally known in the art; however, the following descriptions may be helpful in understanding the differences between some of these different polyethylene resins.

The term "LDPE" may also be referred to as "high pressure ethylene polymer" or "highly branched polyethylene" and is defined to mean that the polymer is partly or entirely homopolymerized or copolymerized in autoclave or tubular reactors at pressures above 14,500 psi (100 MPa) with the use of free-radical initiators, such as peroxides (see for example US 4599392). Resins typically have a density in the range of 0.916 to 0.935 g/cm³.

The term "LLDPE", includes both resin made using the traditional Ziegler-Natta catalyst systems as well as single-site catalysts, including, but not limited to, bis-metallocene catalysts (sometimes referred to as "m-LLDPE") and constrained geometry catalysts, and includes linear, substantially linear or heterogeneous polyethylene copolymers or homopolymers. LLDPEs contain less long chain branching than LDPEs and include the substantially linear ethylene polymers which are further defined in U.S. Patent 5,272,236, U.S. Patent 5,278,272, U.S. Patent 5,582,923 and US Patent 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342 or US 5,854,045). The LLDPEs can be made via gas-phase, solution-phase or slurry polymerization or any combination thereof, using any type of reactor or reactor configuration known in the art.

The term "MDPE" refers to polyethylenes having densities from 0.926 to 0.935 g/cm³. "MDPE" is typically made using chromium or Ziegler-Natta catalysts or using single-site catalysts including, but not limited to, bis-metallocene catalysts and constrained geometry catalysts, and typically have a molecular weight distribution ("MWD") greater than 2.5.

The term "HDPE" refers to polyethylenes having densities greater than about 0.935 g/cm³, which are generally prepared with Ziegler-Natta catalysts, chrome catalysts or single-site catalysts including, but not limited to, bis-metallocene catalysts and constrained geometry catalysts.

The term "ULDPE" refers to polyethylenes having densities of 0.880 to 0.912 g/cm³, which are generally prepared with Ziegler-Natta catalysts, chrome catalysts, or single-site catalysts including, but not limited to, bis-metallocene catalysts and constrained geometry catalysts.

In one aspect, the present invention provides a multilayer film that comprises Layer A which is a sealant layer having a top facial surface and a bottom facial surface and comprising at least 30 weight percent low density polyethylene (LDPE) based on the weight of Layer A; and Layer B having a top facial surface and a bottom facial surface and comprises at least 70 weight percent of at least one of homopolymer polypropylene, random copolymer polypropylene, an impact copolymer of polypropylene, or a combination thereof based on the weight of Layer B, wherein the top facial surface of Layer B is in adhering contact with a bottom facial surface of Layer A, and wherein the film is configured to provide a peelable seal that opens due to delamination between Layer A and Layer B.

In some embodiments, the multilayer film exhibits a maximum seal strength of 2.5 to 6.5 N/15 mm at temperatures between 100° C and 140° C when measured according to ASTM F2029-00(B).

In some embodiments, Layer A comprises at least 50 weight percent low density polyethylene (LDPE) based on the weight of Layer A. Layer A comprises at least 70 weight percent LDPE based on the weight of Layer A in some embodiments. In some embodiments, Layer A comprises up to 100 weight percent LDPE based on the weight of Layer A. In some embodiments, Layer A further comprises linear low density polyethylene (LLDPE).

In some embodiments, Layer B comprises at least 95 weight percent of at least one of homopolymer polypropylene, random copolymer polypropylene, an impact copolymer of polypropylene, or a combination thereof based on the weight of Layer B.

Multilayer films of the present invention, in some embodiments, can include one or more additional layers. For example, in some embodiments, the multilayer film can further comprise a barrier layer. In some embodiments, the multilayer film further comprises Layer C having a top facial surface and a bottom facial surface, wherein the top facial surface of Layer C is in adhering contact with a bottom facial surface of Layer B. In some such embodiments, Layer C comprises a polyolefin.

A multilayer film of the present invention can comprise a combination of two or more embodiments as described herein.

Some embodiments of the present invention relate to packages such as food packages. In some embodiments, a package of the present invention comprises a multilayer film according to any of the embodiments disclosed herein. The package, in some embodiments, is a pouch. In some embodiments, a package of the present invention comprises a multilayer film according to any of the embodiments disclosed herein and a tray, wherein the top facial surface of Layer A is sealed to at least a portion of the tray.

Some embodiments of the present invention relate to multilayer structures. In some embodiments, a multilayer structure comprises a multilayer film according to any of the embodiments disclosed herein. The substrate, in such embodiments, comprises an oriented polyethylene terephthalate film, an oriented polypropylene film, an oriented polyamide film, aluminum, or a polyethylene film. Such multilayer structures can be used to form a package, such as a food package. In some such embodiments, a package comprises a multilayer structure according to any of the embodiments disclosed herein. In some embodiments, a package of the present invention comprises a multilayer structure according to any of the embodiments disclosed herein and a tray, wherein the top facial surface of Layer A is sealed to at least a portion of the tray.

A multilayer structure of the present invention can comprise a combination of two or more embodiments as described herein.

A package of the present invention can comprise a combination of two or more embodiments as described herein.

### Sealant Layer (Layer A)

Multilayer films of the present invention comprise a first layer (Layer A) which is a sealant layer. As set forth herein, the sealant layer comprises at least 30 weight percent and up to 100 weight percent low density polyethylene based on the weight of Layer A in some embodiments. While not wishing to be bound by a particular theory, it is believed that the combination of Layer A having a significant amount of a polyethylene having a high amount of long chain branching (e.g., LDPE) with Layer B (discussed further below) having at least 70 weight percent polypropylene provides an incompatibility between the layers that provides a desirable peel strength due to delamination failure between Layer A and Layer B.

Layer A comprises a significant amount of low density polyethylene (LDPE). In some embodiments, Layer A comprises at least 30 weight percent LDPE, based on the weight of Layer A. Layer A, in some embodiments, comprises at least 50 weight percent LDPE, based on the weight of Layer A. In some embodiments, Layer A comprises at least 70 weight percent LDPE, based on the weight of Layer A. Layer A comprises at least 90 weight percent LDPE, based on the weight of Layer A. In some embodiments, Layer A comprises at least 95 weight percent LDPE, based on the weight of Layer A. Layer A comprises up to 100 weight percent LDPE, based on the weight of Layer A in some embodiments. It should be understood that blends of different LDPE resins could also be included in Layer A, and all references to LDPE generally should be understood as referring to one or more LDPE resins.

In some embodiments, the LDPE has a density of 0.916 to 0.935 g/cm³. All individual values and subranges from 0.916 to 0.935 g/cm³ are included and disclosed herein; for example the density of the LDPE can be from 0.918 to 0.930 g/ cm³, or in the alternative, from 0.920 to 0.932 g/ cm³, or in the alternative, from 0.920 to 0.930 g/ cm³.

In some embodiments, the LDPE has a melt index (I₂) of 20 g/10 minutes or less. All individual values and subranges up to 20 g/10 minutes are included herein and disclosed herein. For example, the LDPE can have a melt index from a lower limit of 0.1, 0.2, 0.25, 0.5, 0.75, 1, 2, 4, 5, 10 or 15 g/10 minutes to an upper limit of 1, 2, 4, 5, 10, or 15 g/10 minutes. The LDPE has a melt index (I₂) of up to 10 g/10 minutes in some embodiments. The LDPE has a melt index (I₂) of up to 5 g/10 minutes in some embodiments. In some embodiments, the LDPE has a melt index (I₂) less than 3 g/10 minutes. The LDPE, in some embodiments, has a melt index (I₂) of 0.1 to 2.5 g/10 minutes.

Examples of commercially available LDPE that can be used in embodiments of the present invention include DOW™ LDPE 303E, DOW™ LDPE 352E, and DOW™ LDPE 310E, as well as other low density polyethylenes, which are commercially available from The Dow Chemical Company, as well as other low density polyethylenes commercially available from others in the industry.

As noted above, in some embodiments, Layer A can further comprise linear low density polyethylene (LLDPE). While not wishing to be bound by a particular theory, it is believed that incorporation of some amount LLDPE in Layer A helps to improve compatibility and adhesion with Layer B which can increase the peel strength between the two layers. Thus, the amount of LLDPE to be included in Layer A can vary, for example, depending on the desired peel strength.

In some embodiments where LLDPE is included in Layer A, Layer A comprises up to 70 weight percent LLDPE, based on the weight of Layer A. Layer A, in some embodiments, comprises up to 50 weight percent LLDPE, based on the weight of Layer A. In some embodiments, Layer A comprises up to 30 weight percent LLDPE, based on the weight of Layer A. Layer A comprises up to 10 weight percent LLDPE, based on the weight of Layer A. In some embodiments, Layer A comprises up to 5 weight percent LLDPE, based on the weight of Layer A. It should be understood that blends of different LLDPE resins could also be included in Layer A, and all references to LLDPE generally should be understood as referring to one or more LLDPE resins.

The LLDPE(s) that can be used in Layer A has a density less than or equal to 0.955 g/ cm³ in some embodiments. All individual values and subranges less than or equal to 0.955 g/ cm³ are included herein and disclosed herein; for example, the density of the LLDPE(s) can be to an upper limit of 0.955, 0.950, 0.945, 0.940, 0.935, 0.930, 0.925, 0.920 or 0.915 g/cm³. In some aspects of the invention, the LLDPE(s) has a density greater than or equal to 0.870 g/cm³. All individual values and subranges between 0.870 and 0.955 g/ cm³ are included herein and disclosed herein.

In some embodiments, the LLDPE has a melt index (I₂) of 20 g/10 minutes or less. All individual values and subranges up to 20 g/10 minutes are included herein and disclosed herein. For example, the LLDPE can have a melt index from a lower limit of 0.1, 0.2, 0.25, 0.5, 0.75, 1, 2, 4, 5, 10 or 15 g/10 minutes to an upper limit of 1, 2, 4, 5, 10, or 15 g/10 minutes. The LLDPE has a melt index (I₂) of up to 10 g/10 minutes in some embodiments. The LLDPE has a melt index (I₂) of up to 5 g/10 minutes in some embodiments. In some embodiments, the LLDPE has a melt index (I₂) less than 3 g/10 minutes. The LLDPE, in some embodiments, has a melt index (I₂) of 0.1 to 2.5 g/10 minutes.

Examples of commercially available LLDPE that can be used in embodiments of the present invention include DOWLEX™ 4056.01G, DOWLEX™ 2045.01G, and DOWLEX™ NG 5056G, as well as other linear low density polyethylenes, which are commercially available from The Dow Chemical Company, as well as other linear low density polyethylenes commercially available from others in the industry.

Rather than LLDPE, Layer A can comprise, in addition to the LDPE, other polyethylene resins having similar or lower densities and similar melt indices to the LLDPE including enhanced polyethylenes and polyolefin plastomers. One non-limiting example of a commercially available enhanced polyethylene that can be used in some embodiments instead of LLDPE is ELITE™ 5400G (density of 0.916 g/cm³ and melt index (I₂) of 1.0 g/10 minutes), which is commercially available from The Dow Chemical Company. One non-limiting example of a commercially available polyolefin plastomer that can be used in some embodiments instead of LLDPE is AFFINITY™ PL 1881G (density of 0.904 g/cm³ and melt index (I₂) of 1.0 g/10 minutes), which is commercially available from The Dow Chemical Company.

In some embodiments, minor amounts (e.g., less than 5 weight percent based on the weight of Layer A) of other polyethylenes can also be included in Layer A.

In some embodiments, the sealant layer (Layer A) can be corona treated using techniques known to those of skill in the art prior to sealing the multilayer film.

### Layer B

Multilayer films of the present invention include a second layer (Layer B) having a top facial surface and a bottom facial surface, wherein the top facial surface of Layer B is in adhering contact with a bottom facial surface of the sealant layer (Layer A). Layer B comprises at least 70 weight percent and up to 100 weight percent polypropylene (e.g., homopolymer polypropylene, random copolymer polypropylene, an impact copolymer, or a combination thereof) based on the weight of Layer B. As noted above, while not wishing to be bound by a particular theory, it is believed that the combination of the polypropylene in Layer B with Layer A having a significant amount of a polyethylene having a high amount of long chain branching (e.g., LDPE) provides an incompatibility between the layers that provides a desirable peel strength due to delamination failure between Layer A and Layer B.

The polypropylene can comprise homopolymer polypropylene, random copolymer, an impact copolymer of polypropylene, or a combination thereof.

A variety of homopolymer polypropylenes can be used in Layer B in various embodiments. Typically suitable homopolymer polypropylenes have a melt flow rate of 0.5 to 10 g/10 minutes. Examples of commercially available homopolymer polypropylene that can be used in embodiments of the present invention include INSPIRE 147 and DH357.01, as well as other homopolymer polypropylenes, which are commercially available (or in the case of INSPIRE 147, previously available) from Braskem Europe GmbH.

A variety of random copolymer polypropylenes can be used in Layer B in various embodiments. With random copolymer polypropylene, ethylene is typically the other monomer included. Typically suitable random copolymer polypropylenes have a melt flow rate of 0.5 to 10 g/10 minutes. Examples of commercially available random copolymer polypropylene that can be used in embodiments of the present invention include INSPIRE 361 and DR152.00, as well as other random copolymer polypropylenes, which are commercially available from Braskem Europe GmbH.

A variety of impact copolymers of polypropylene can be used in Layer B in various embodiments. The impact copolymer of polypropylene is typically either an ethylene/propylene copolymer, an ethylene-butene rubber phase dispersed within a homopolypropylene, or an ethylene-butene rubber phase dispersed random copolymer matrix. Typically suitable impact copolymers polypropylene have a melt flow rate of 0.5 to 10 g/10 minutes. Examples of commercially available impact copolymers of polypropylene that can be used in embodiments of the present invention include INSPIRE 137, INSPIRE 114 and INSPIRE 153, as well as other impact copolymers of polypropylene, which are commercially available from Braskem Europe GmbH.

In some embodiments, Layer B comprises at least 70 weight percent polypropylene, based on the weight of Layer B. Layer B, in some embodiments, comprises at least 90 weight percent polypropylene, based on the weight of Layer B. Layer B comprises at least 95 weight percent polypropylene, based on the weight of Layer B. In some embodiments, Layer B comprises up to 100 weight percent polypropylene, based on the weight of Layer B in some embodiments. It should be understood that blends of different polypropylene resins (homopolymer polypropylene, random copolymer, and/or an impact copolymer of polypropylene) could also be included in Layer B, and all references to polypropylene generally should be understood as referring to one or more polypropylene resins.

In some embodiments, up to 30 weight percent of other polyolefins, such as polyethylene and its copolymers, can also be included in Layer B.

### Other Layers

Some embodiments of multilayer films of the present invention can include layers beyond those described above. In such embodiments comprising three or more layers, the top facial surface of Layer A would still be the top facial surface of the film. In other words, any additional layers would be in adhering contact with a bottom facial surface of Layer B, or another intermediate layer.

For example, a multilayer film can further comprise other layers typically included in multilayer films depending on the application including, for example, oxygen barrier layers, tie layers, polyethylene layers, other polypropylene layers.

As one example, in some embodiments, a multilayer film can comprise another layer (Layer C) having a top facial surface and a bottom facial surface, wherein the top facial surface of Layer C is in adhering contact with a bottom facial surface of Layer B.

In some such embodiments, Layer C can comprise one or more polyolefins such as polyethylene, polypropylene, or blends thereof.

Layer C, in some embodiments, comprises polyethylene. In such embodiments, Layer C can comprise any polyethylene known to those of skill in the art to be suitable for use as a layer in a multilayer film based on the teachings herein. Examples of polyethylenes that can be used in Layer C include low density polyethylene (LDPE), linear low density polyethylene (LLDPE), medium density polyethylene (MDPE), high density polyethylene (HDPE), high melt strength high density polyethylene (HMS-HDPE), ultrahigh density polyethylene (UHDPE), enhanced polyethylenes, and others. However, to the extent Layer C comprises LDPE, the total amount of LDPE should comprise 30 weight percent or less of Layer C, based on the total weight of Layer C, so as to minimize the possibility of delamination occurring between Layer B and Layer C rather than between Layer A and Layer C.

Layer C, in some embodiments, comprises polypropylene. The polypropylene can comprise propylene/α-olefin copolymer, propylene homopolymer, or blends thereof. The propylene/α-olefin copolymer, in various embodiments, can be random copolymer polypropylene (rcPP), impact copolymer polypropylene (hPP + at least one elastomeric impact modifier) (ICPP), high impact polypropylene (HIPP), high melt strength polypropylene (HMS-PP), isotactic polypropylene (iPP), syndiotactic polypropylene (sPP), propylene based copolymers with ethylene, and combinations thereof.

However, as noted above, Layer C can comprise any number of other polymers or polymer blends. For example, if the multilayer films includes a barrier layer, Layer C could be a tie layer in adhering contact between Layer B and the barrier layer.

Depending on the composition of the additional layer and the multilayer film, in some embodiments, the additional layer can be coextruded with other layers in the film.

### Additives

It should be understood that any of the foregoing layers can further comprise one or more additives as known to those of skill in the art such as, for example, antioxidants, ultraviolet light stabilizers, thermal stabilizers, slip agents, antiblock, pigments or colorants, processing aids, crosslinking catalysts, flame retardants, fillers and foaming agents.

Multilayer films comprising the combinations of layers disclosed herein can have a variety of thicknesses depending, for example, on the number of layers, the intended use of the film, and other factors. Multilayer films of the present invention, in some embodiments, have a thickness of 25 to 200 microns (typically, 35-150 microns).

Multilayer films of the present invention, in some embodiments, can advantageously provide desirable seal properties. For example, the multilayer film can have a seal strength to provide an "easy open" package that opens via "burst peel" due to delamination between Layer A (the sealant layer) and Layer B (the layer adjacent to the sealant layer). In some embodiments, multilayer films of the present invention exhibit a maximum seal strength of 2.5 to 6.5 N/15 mm at temperatures between 100° C and 140° C when measured according to ASTM F2029-00(B).

### Methods of Preparing Multilayer Films

Multilayer films can be formed using techniques known to those of skill in the art based on the teachings herein. For example, for those layers that can be coextruded, such layers can be coextruded as blown films or cast films using techniques known to those of skill in the art based on the teachings herein. In particular, based on the compositions of the different film layers disclosed herein, blown film manufacturing lines and cast film manufacturing lines can be configured to coextrude multilayer films of the present invention in a single extrusion step using techniques known to those of skill in the art based on the teachings herein.

As indicated above, in some embodiments, the sealant layer (Layer A) can be corona treated using techniques known to those of skill in the art based on the teachings herein.

### Multilayer Structures

Some embodiments of the present invention also relate to multilayer structures. In some such embodiments, a multilayer structure comprises a multilayer film according to any of the embodiments disclosed herein laminated to a substrate. The substrate can be, for example, oriented polyethylene terephthalate film, an oriented polypropylene film, an oriented polyamide film, aluminum foil, a polyethylene film, or paper, as well as metallized and coated versions of the polymeric films (e.g., coated with silicon dioxide, aluminum oxide, polyvinylidene chloride, ethylene vinyl acetate, polyvinyl alcohol, or acrylics).

The substrate can comprise a polyethylene terephthalate film, in some embodiments. For example, in some embodiments, the multilayer structure comprises a polyethylene terephthalate film, and a top facial surface of the polyethylene terephthalate film is laminated to a bottom facial surface of the multilayer film. In such embodiments, any polyethylene terephthalate film known to those of skill in the art based on the teachings herein can be used.

In some embodiments, the first film can comprise polypropylene such as, for example, a biaxially oriented polypropylene film. For example, in some embodiments, the multilayer structure comprises a biaxially oriented polypropylene film, and a top facial surface of the polypropylene film is laminated to a bottom facial surface of the multilayer film. In such embodiments, any biaxially oriented polypropylene film known to those of skill in the art based on the teachings herein can be used.

Such multilayer structures can be formed by laminating a facial surface of a multilayer film of the present invention to a facial surface of the substrate using techniques known to those of skill in the art based on the teachings herein. For example, in some embodiments where the substrate comprises a polyethylene terephthalate film, the polyethylene terephthalate film can be laminated to a bottom facial surface of Layer B (or the outermost layer of the multilayer film is Layer B is not an outer layer) with a top facial surface of the sealant layer (Layer A) remaining as the top facial surface of the laminated multilayer film.

### Packages

Multilayer films and multilayer structures of the present invention can be used to form packages. Such packages can be formed from any of the multilayer films and multilayer structures described herein.

Examples of such packages can include flexible packages, pouches, stand-up pouches, and pre-made packages or pouches. In some embodiments, multilayer films of the present invention can be used for food packages. Examples of food that can be included in such packages include meats, cheeses, cereal, nuts, juices, sauces, and others. Such packages can be formed using techniques known to those of skill in the art based on the teachings herein and based on the particular use for the package (e.g., type of food, amount of food).

Packages utilizing multilayer films of the present invention can advantageously be formed with heat seal packaging equipment utilizing continuously heated seal bars, in some embodiments. The thermal resistance properties of the outer layer of the multilayer films help protect the film structure during formation of the package with the continuously heated seal bars. Examples of such packaging equipment utilizing continuously heated seal bars include horizontal form-fill-seal machines and vertical form-fill-seal machines. Examples of packages that can be formed from such equipment include stand-up pouches, 4-corner packages (pillow pouches), fin seal packages and others.

In other embodiments, multilayer films or multilayer structures of the present invention can be sealed to a sheet or tray to form a package, such as a food package. Examples of food that can be included in such packages include meats, cheeses, and other foods.

The tray can be formed from sheets based on polyesters (such as amorphous polyethylene terephthalate, oriented polyethylene terephthalate, polybutylene terephthalate, polytrimethylene terephthalate, and polyethylene napthalate), polypropylene, polyethylene, and polystyrene. Such sheets, when not based on polyethylene, will typically include a heat seal layer (and possibly other layers) based on polyethylene which can be provided by coextrusion, lamination, or coating. Multilayer films or multilayer structures of the present invention can be particularly well-suited for use with trays or sheets formed from polyethylene terephthalate or amorphous polyethylene terephthalate. Such trays or sheets can be formed using techniques known to those of skill in the art based on the teachings herein and based on the particular use for the package (e.g., type of food, amount of food).

A multilayer film or multilayer structure of the present invention can be sealed to the sheet or tray via the sealant layer (Layer A) of the film using techniques known to those of skill in the art based on the teachings herein.

### TEST METHODS

Unless otherwise indicated herein, the following analytical methods are used in describing aspects of the present invention:

### Density

Samples for density measurement are prepared according to ASTM D 1928. Polymer samples are pressed at 190° C and 30,000 psi (207 MPa) for three minutes, and then at 21° C and 207 MPa for one minute. Measurements are made within one hour of sample pressing using ASTM D792, Method B.

### Melt Index

Melt indices I₂ (or 12) and I₁₀ (or 110) are measured in accordance with ASTM D-1238 at 190° C and at 2.16 kg and 10 kg load, respectively. Their values are reported in g/10 min. "Melt flow rate" is used for polypropylene based resins and determined according to ASTM D1238 (230° C at 2.16 kg).

### Melt Flow Rate

Melt flow rates are measured in accordance with ASTM D-1238 or ISO 1133 (230°C; 2.16 kg).

### Heat Seal Strength

Heat seal strength, or seal strength is measured using ASTM F2029-00 as follows. The film sample, which can be any thickness, is sealed to itself at different temperatures at a pressure of 5 bar and a 0.5 second dwell time (films of thicknesses greater than 100 micron are sealed with a 1 second dwell time). The samples are conditioned for 40 hours and then cut into 15mm strips which are then pulled on an Instron tensile testing device at a rate of 100mm/min. 5 replicate test samples are measured, and the average is recorded.

Some embodiments of the invention will now be described in detail in the following Examples.

### Examples

A number of multilayer films are prepared as set forth in Table 1. The films are 5-layer, 50 micron films having the following structure: Layer A (7.5 microns)/Layer B (10 microns)/Layer C (15 microns)/Layer B (10 microns)/Layer D (7.5 microns). Multilayer films according to some embodiments of the present invention are identified as Inventive Films, whereas the other multilayer films are Comparative Films.

**Table 1**

| | **Layer D** | **Layer B** | **Layer C** | **Layer A (Sealant Layer)** |
|---|---|---|---|---|
| Comparative Film A | LLDPE1 | EPE | LLDPE2 | LDPE1 |
| Comparative Film B | LLDPE1 | LLDPE1 | LLDPE2 | LDPE1 |
| Comparative Film C | LLDPE1 | rPP | LLDPE2 | rPP |
| Inventive Film 1 | LLDPE1 | iPP | LLDPE2 | LDPE1 |
| Inventive Film 2 | LLDPE1 | iPP | LLDPE2 | LDPE2 |
| Inventive Film 3 | LLDPE1 | rPP | LLDPE2 | LDPE1 |
| Inventive Film 4 | LLDPE1 | hPP | LLDPE2 | LDPE1 |
| Inventive Film 5 | LLDPE1 | hPP | LLDPE2 | LDPE1 (70%) |
| | | | | LLDPE3 (30%) |
| Inventive Film 6 | LLDPE1 | hPP | LLDPE2 | LDPE1 (30%) |
| | | | | LLDPE3 (70%) |

The percentages in Table 1 are weight percentages based on the total weight of the respective layer. LLDPE1 is DOWLEX™ 2042EC linear low density polyethylene having a density of 0.930 g/cm³ and a melt index (I₂) of 1.0 g/10 minutes, commercially available from The Dow Chemical Company. LLDPE2 is DOWLEX™ 4056G linear low density polyethylene having a density of 0.917 g/cm³ and a melt index (I₂) of 1.3 g/10 minutes, commercially available from The Dow Chemical Company. LLDPE3 is DOWLEX™ 4056.01G linear low density polyethylene having a density of 0.919 g/cm³ and a melt index (I₂) of 1.3 g/10 minutes, commercially available from The Dow Chemical Company. LDPE1 is DOW™ LDPE 352E low density polyethylene having a density of 0.925 g/cm³ and a melt index (I₂) of 2.0 g/10 minutes, commercially available from The Dow Chemical Company. LDPE2 is DOW™ LDPE 303E low density polyethylene having a density of 0.922 g/cm³ and a melt index (I₂) of 0.3 g/10 minutes, commercially available from The Dow Chemical Company. rPP is INSPIRE 361 random copolymer polypropylene having a density of 0.900 g/cm³ and a melt flow rate of 1.75, commercially available from Braskem Europe GmbH. iPP is INSPIRE 137 impact copolymer of polypropylene having a density of 0.900 g/cm³ and a melt flow rate of 0.8, commercially available from Braskem Europe GmbH. hPP is INSPIRE 147 homopolymer propylene having a density of 0.900 g/cm³ and a melt flow rate of 3.2, commercially available from Braskem Europe GmbH. EPE is ELITE™ 5960G enhanced polyethylene commercially available from The Dow Chemical Company having a density of 0.962 g/cm³ and a melt index (I₂) of 0.85 g/10 minutes.

The films are fabricated through a conventional polyethylene blown film line to provide multilayer films with a weight distribution of 15% Layer A/20% Layer B/30% Layer C/20% Layer B/15% Layer D. The melt temperatures of resin extrusion for Layers A, B, C and D are approximately 235-240 °C, 225-230 °C, 230-235 °C and 190-200 °C, respectively. The die diameter of the blown film line is 60 mm, the blow-up ratio is 2.5, and the die gap is 1.8 mm. The output rate is 10 kg/hr.

The heat seal strengths of the films are measured using the technique described above at temperatures of 95, 100, 105, 110, 115, 120, 130, 140, and 150° C. The results are shown in Figure 1.

Comparative Film A (shown as "Comp1" in Figure 1) and Comparative Film B (shown as "Comp2" in Figure 1) display lock-up seals which cannot be opened, and the seal strength represents the approximate tensile strength of the film itself as failure occurs adjacent to the sealed area. Comparative Film C (shown as "Comp3" in Figure 1) displays partial de-lamination behavior during seal testing, but the opening force required is still higher than desired. Inventive Films 1-6 (shown as "Inv1"-"Inv6" in Figure 1) all show a consistent de-lamination between the sealant layer and the adjacent layer and an appropriate force for an easy-open package. Inventive Films 5 and 6 ("Inv5" and "Inv6" in Figure 1) show how the incorporation of LLDPE into the sealant layer increases the peel force due to increased compatibility with the adjacent layer.

## Claims

1. A multilayer film comprising:
Layer A which is a sealant layer having a top facial surface and a bottom facial surface and comprising at least 30 weight percent low density polyethylene based on the weight of Layer A; and
Layer B having a top facial surface and a bottom facial surface and comprising at least 70 weight percent of at least one of homopolymer polypropylene, random copolymer polypropylene, an impact copolymer of polypropylene, or a combination thereof based on the weight of Layer B, wherein the top facial surface of Layer B is in adhering contact with a bottom facial surface of Layer A,
wherein the film is configured to provide a peelable seal that opens due to delamination between Layer A and Layer B.

2. The multilayer film of claim 1, wherein the film exhibits a maximum seal strength of 2.5 to 6.5 N/15 mm at temperatures between 100° C and 140° C when measured according to ASTM F2029-00(B).

3. The multilayer film of claim 1 or claim 2, wherein Layer A comprises at least 50 weight percent low density polyethylene based on the weight of Layer A.

4. The multilayer film of any of the preceding claims, wherein Layer A further comprises linear low density polyethylene.

5. The multilayer film of any of the preceding claims, wherein Layer B comprises at least 95 weight percent of at least one of homopolymer polypropylene, random copolymer polypropylene, an impact copolymer of polypropylene, or a combination thereof based on the weight of Layer B.

6. The multilayer film of any of the preceding claims further comprising Layer C having a top facial surface and a bottom facial surface, wherein the top facial surface of Layer C is in adhering contact with a bottom facial surface of Layer B.

7. The multilayer film of claim 6, wherein Layer C comprises a polyolefin.

8. The multilayer film of any of the preceding claims further comprising a barrier layer.

9. A package comprising the multilayer film of any of the preceding claims.

10. The package of claim 9, wherein the package is a pouch.

11. A package comprising the multilayer film of any of claims 1-8 and a tray, wherein the top facial surface of Layer A is sealed to at least a portion of the tray.

12. A multilayer structure comprising the multilayer film according to any of claims 1-8 laminated to a substrate.

13. The multilayer structure of claim 12, wherein the substrate comprises an oriented polyethylene terephthalate film, an oriented polypropylene film, an oriented polyamide film, aluminum, or a polyethylene film.

14. A package comprising the multilayer structure of any of claim 12 or claim 13.

15. A package comprising the multilayer structure of claim 12 or claim 13 and a tray, wherein the top facial surface of Layer A is sealed to at least a portion of the tray.

## Patentansprüche

1. Eine Mehrschichtfolie, die Folgendes beinhaltet:
Schicht A, die eine Abdichtungsschicht ist, die eine obere Stirnfläche und eine untere Stirnfläche aufweist und zu mindestens 30 Gewichtsprozent, bezogen auf das Gewicht von Schicht A, Polyethylen niederer Dichte beinhaltet; und
Schicht B, die eine obere Stirnfläche und eine untere Stirnfläche aufweist und zu mindestens 70 Gewichtsprozent, bezogen auf das Gewicht von Schicht B, mindestens eines von Homopolymerpolypropylen, statistischem Copolymerpolypropylen, einem schlagzähen Copolymer von Polypropylen oder einer Kombination davon beinhaltet,
wobei die obere Stirnfläche von Schicht B in haftendem Kontakt mit einer unteren Stirnfläche von Schicht A steht,
wobei die Folie konfiguriert ist, um eine abziehbare Abdichtung bereitzustellen, die sich aufgrund von Schichtentrennung zwischen Schicht A und Schicht B öffnet.

2. Mehrschichtfolie gemäß Anspruch 1, wobei die Folie eine maximale Siegelnahtfestigkeit von 2,5 bis 6,5 N/15 mm bei Temperaturen zwischen 100 °C und 140 °C vorweist, wenn gemäß ASTM F2029-00(B) gemessen.

3. Mehrschichtfolie gemäß Anspruch 1 oder Anspruch 2, wobei Schicht A zu mindestens 50 Gewichtsprozent, bezogen auf das Gewicht von Schicht A, Polyethylen niederer Dichte beinhaltet.

4. Mehrschichtfolie gemäß einem der vorhergehenden Ansprüche, wobei Schicht A ferner lineares Polyethylen niederer Dichte beinhaltet.

5. Mehrschichtfolie gemäß einem der vorhergehenden Ansprüche, wobei Schicht B zu mindestens 95 Gewichtsprozent, bezogen auf das Gewicht von Schicht B, mindestens eines von Homopolymerpolypropylen, statistischem Copolymerpolypropylen, einem schlagzähen Copolymer von Polypropylen oder einer Kombination davon beinhaltet.

6. Mehrschichtfolie gemäß einem der vorhergehenden Ansprüche, die ferner Schicht C beinhaltet, die eine obere Stirnfläche und eine untere Stirnfläche aufweist, wobei die obere Stirnfläche von Schicht C in haftendem Kontakt mit einer unteren Stirnfläche von Schicht B steht.

7. Mehrschichtfolie gemäß Anspruch 6, wobei Schicht C ein Polyolefin beinhaltet.

8. Mehrschichtfolie gemäß einem der vorhergehenden Ansprüche, die ferner eine Barriereschicht beinhaltet.

9. Eine Verpackung, die die Mehrschichtfolie gemäß einem der vorhergehenden Ansprüche beinhaltet.

10. Verpackung gemäß Anspruch 9, wobei die Verpackung ein Beutel ist.

11. Eine Verpackung, die die Mehrschichtfolie gemäß einem der Ansprüche 1-8 und eine Schale beinhaltet, wobei die obere Stirnfläche von Schicht A an mindestens einem Abschnitt der Schale abgedichtet ist.

12. Eine Mehrschichtstruktur, die die Mehrschichtfolie gemäß einem der Ansprüche 1-8 an ein Substrat laminiert beinhaltet.

13. Mehrschichtstruktur gemäß Anspruch 12, wobei das Substrat eine gereckte Polyethylenterephthalatfolie, eine gereckte Polypropylenfolie, eine gereckte Polyamidfolie, Aluminium oder eine Polyethylenfolie beinhaltet.

14. Eine Verpackung, die die Mehrschichtstruktur gemäß einem der Ansprüche 12 oder 13 beinhaltet.

15. Eine Verpackung, die die Mehrschichtstruktur gemäß Anspruch 12 oder Anspruch 13 und eine Schale beinhaltet, wobei die obere Stirnfläche von Schicht A an mindestens einem Abschnitt der Schale abgedichtet ist.

## Revendications

1. Un film multicouche comprenant :
une Couche A qui est une couche de matériau d'étanchéité ayant une surface faciale supérieure et une surface faciale inférieure et comprenant au moins 30 pour cent en poids de polyéthylène basse densité rapporté au poids de la Couche A ; et
une Couche B ayant une surface faciale supérieure et une surface faciale inférieure et comprenant au moins 70 pour cent en poids d'au moins un élément parmi un polypropylène homopolymère, un polypropylène copolymère aléatoire, un copolymère résistant au choc de polypropylène, ou une combinaison de ceux-ci rapporté au poids de la Couche B, où la surface faciale supérieure de la Couche B est en contact adhésif avec une surface faciale inférieure de la Couche A,
où le film est configuré pour fournir un joint d'étanchéité décollable qui s'ouvre du fait d'un délaminage entre la Couche A et la Couche B.

2. Le film multicouche de la revendication 1, où le film présente une résistance de scellage maximum de 2,5 à 6,5 N/15 mm à des températures comprises entre 100 °C et 140 °C lorsqu'elle est mesurée selon l'ASTM F2029-00(B).

3. Le film multicouche de la revendication 1 ou de la revendication 2, où la Couche A comprend au moins 50 pour cent en poids de polyéthylène basse densité rapporté au poids de la Couche A.

4. Le film multicouche de n'importe lesquelles des revendications précédentes, où la Couche A comprend en outre un polyéthylène basse densité linéaire.

5. Le film multicouche de n'importe lesquelles des revendications précédentes, où la Couche B comprend au moins 95 pour cent en poids d'au moins un élément parmi un polypropylène homopolymère, un polypropylène copolymère aléatoire, un copolymère résistant au choc de polypropylène, ou une combinaison de ceux-ci rapporté au poids de la Couche B.

6. Le film multicouche de n'importe lesquelles des revendications précédentes comprenant en outre une Couche C ayant une surface faciale supérieure et une surface faciale inférieure, où la surface faciale supérieure de la Couche C est en contact adhésif avec une surface faciale inférieure de la Couche B.

7. Le film multicouche de la revendication 6, où la Couche C comprend une polyoléfine.

8. Le film multicouche de n'importe lesquelles des revendications précédentes comprenant en outre une couche barrière.

9. Un emballage comprenant le film multicouche de n'importe lesquelles des revendications précédentes.

10. L'emballage de la revendication 9, où l'emballage est un sachet.

11. Un emballage comprenant le film multicouche de n'importe lesquelles des revendications 1 à 8 et un plateau, où la surface faciale supérieure de la Couche A est scellée à au moins une portion du plateau.

12. Une structure multicouche comprenant le film multicouche selon n'importe lesquelles des revendications 1 à 8 stratifié sur un substrat.

13. La structure multicouche de la revendication 12, où le substrat comprend un film de polyéthylène téréphtalate orienté, un film de polypropylène orienté, un film de polyamide orienté, de l'aluminium, ou un film de polyéthylène.

14. Un emballage comprenant la structure multicouche de n'importe lesquelles de la revendication 12 ou de la revendication 13.

15. Un emballage comprenant la structure multicouche de la revendication 12 ou de la revendication 13 et un plateau, où la surface faciale supérieure de la Couche A est scellée à au moins une portion du plateau.
